**Europäisches Patentamt**

**European Patent Office**

**Office européen des brevets**

(19)

(11) Veröffentlichungsnummer : **0 014 946**
**B1**

(12) **EUROPÄISCHE PATENTSCHRIFT**

(45) Veröffentlichungstag der Patentschrift :
07.04.82

(21) Anmeldenummer : 80100712.1

(22) Anmeldetag : 13.02.80

(51) Int. Cl.³ : **C 09 J 5/00**, D 21 H 1/02,
**B 31 B 1/28**

(54) Verfahren zum Verkleben von Papier- und/oder Kartonteilen.

(30) Priorität : 14.02.79 DE 2905604

(43) Veröffentlichungstag der Anmeldung :
03.09.80 (Patentblatt 80/18)

(45) Bekanntmachung des Hinweises auf die Patenterteilung : 07.04.82 Patentblatt 82/14

(84) Benannte Vertragsstaaten :
DE

(56) Entgegenhaltungen :
GB - A - 1 380 430
US - A - 3 912 576

(73) Patentinhaber : Maschinenfabrik Rissen GmbH
Lehmkuhlenweg 111
D-2000 Hamburg 56 (DE)

4P Nicolaus Kempten GmbH
Ulmer Strasse 18
D-8960 Kempten (DE)

(72) Erfinder : Schmidt, Werner
Hufner Strasse 7
D-2000 Hamburg 76 (DE)

(74) Vertreter : Hutzelmann, Gerhard
Kronenstrasse 16
D-8960 Kempten (DE)

EP 0 014 946 B1

Imprimerie Jouve, 18, rue St-Denis, 75001 Paris, France

Verfahren zum Verkleben von Papier- und/oder Kartonteilen

Die Erfindung betrifft ein Verfahren zum Verkleben von Papier- und/oder Kartonteilen oder dgl., insbesondere zur Herstellung von Faltschachteln, Dosen und Bechern, bei dem wenigstens auf eines der miteinander zu verklebenden Teile ein selbsttätig abbindendes Klebemittel in Form von wässrigem Kaltleim aufgebracht wird und die miteinander zu verklebenden Teile dann aufeinandergepreßt werden.

Bei der Herstellung von Faltschachteln, Dosen und Bechern ist es notwendig, Nähte zwischen den einzelnen Teilen zu verkleben. An sich würde sich dabei als Klebemittel ein Kaltleim anbieten, der zahlreiche Vorteile gegenüber anderen bekannten Klebemitteln aufweist. In der Praxis konnte allerdings Kaltleim nicht eingesetzt werden, da er eine zu lange Abbindezeit benötigt, was den Produktionsfluß stark beeinträchtigen würde. Man hat daher bisher überwiegend sogenannte Hotmelts verwendet oder die Papier- und/oder Kartonteile mit thermoplastischen Kunststoffen beschichtet und miteinander unter Wärmeeinwirkung versiegelt. Das Auftragen von Hotmelt sowie die Beschichtung mit thermoplastischen Kunststoffen ist aber umständlich und teuer.

Der Erfindung liegt daher die Aufgabe zugrunde, ein Verfahren zu finden, das den Einsatz von Kaltleim in einer wirtschaftlich vertretbaren Weise ermöglicht.

Diese Aufgabe wird erfindungsgemäß dadurch gelöst, daß zum Aufeinanderpressen ein Ultraschallgeber (Sonotrode) und ein Gegenwerkzeug (Dorn) verwendet werden und das Klebemittel in seinem Abbindevorgang durch den Ultraschall unterstützt, bzw. das bereits wenigstens teilweise abgebundene Klebemittel durch den Ultraschall reaktiviert wird.

Hierdurch wird die Abbindezeit des Klebemittels so stark herabgesetzt, daß auch wasserhaltiger Kaltleim eingesetzt werden kann. Das Auftragen dieses Kaltleims ist sehr viel einfacher als das Auftragen von Hotmelt, das erst verflüssigt werden muß.

Es ist zwar bekannt, die Abbindezeit von Kaltleim durch Wärmeeinwirkung herabzusetzen ; um jedoch wirtschaftlich, d.h. schnell arbeiten zu können, müßte mit sehr heißen Werkzeugen gearbeitet werden. Dies wiederum würde zu Beschädigungen des Papiers bzw. des Kartons führen, was nicht akzeptabel ist.

Bei dem vorliegenden erfindungsgemäßen Verfahren kann dagegen sogar vorgesehen sein, daß der Ultraschallgeber (Sonotrode) und/oder das Gegenwerkzeug gekühlt werden. Damit ist auch bei hoher Ultraschallbeaufschlagung keinerlei Beschädigung des Papiers bzw. Kartons zu erwarten.

Aus der US-A-3 912 576 und der GB-A-1 380 430 ist es zwar bekannt, Ultraschall zum Versiegeln bzw. Verschweißen von Kartonlagen miteinander einzusetzen. Dazu ist es aber notwendig, die Kartonlagen mit einem siegel- bzw. schweißbaren Kunststoff zu beschichten. Gerade das soll aber mit der vorliegenden Erfindung vermieden werden.

Der erfindungsgemäß verwendete wässrige Kaltleim läßt sich im Gegensatz zum beim Stand der Technik notwendigen thermoplastischen Kunststoff besonders einfach und schnell und ohne komplizierte Auftragsvorrichtung auf die miteinander zu verbindenden Teile aufbringen.

Ebenfalls sehr vorteilhaft kann es sein, wenn gemäß der Erfindung die Klebestelle während der gesamten Preßdauer mit Ultraschall beaufschlagt wird.

Die Erfindung wird im folgenden anhand einer vorteilhaften Ausführungsform unter Bezugnahme auf die beigefügte Zeichnung beispielsweise beschrieben. Es zeigen :

Figur 1   im Querschnitt in schematischer Darstellung den prinzipiellen Aufbau einer Vorrichtung zur Durchführung des Verfahrens ; und

Figur 2   eine Detailansicht der Klebestelle von Fig. 1.

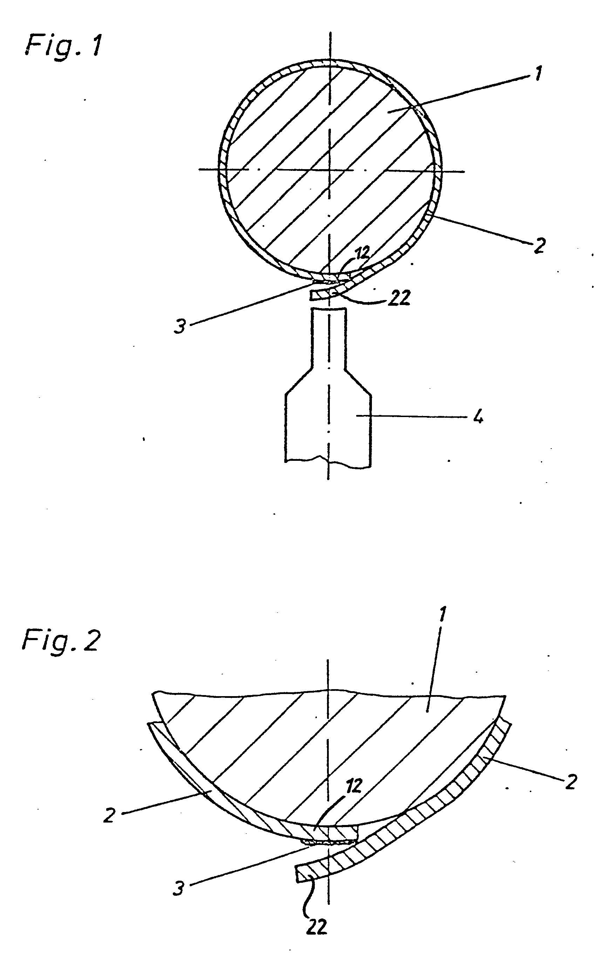

In Fig. 1 ist ein Dorn 1 einer Vorrichtung zur Herstellung einer zylinderförmigen oder konusförmigen Seitenwand eines Kartonbechers gezeigt, um den ein passend ausgeschnittenes Kartonteil 2 herumgelegt wird, dessen beide Randstreifen 12 und 22 miteinander verbunden werden sollen. Vor oder nach dem Herumlegen des Kartonteils 2 um den Dorn 1 wird dieses im Bereich der Bechernaht mit einem Klebemittel 3 versehen. Selbstverständlich kann dieses Klebemittel 3 auch auf der gegenüberliegenden Seite der Klebestelle vorgesehen sein. Als Klebemittel wird ein sogenannter Kaltkleber verwendet, der ohne Einwirkung von Wärme abzubinden vermag. Beispielsweise kann ein Weißleim verwendet werden, der in Form einer wässrigen Dispersion vorliegt. Zum Anpressen des Randstreifens 22 dient eine Ultraschallquelle (Sonotrode) 4. Es ist möglich, die Sonotrode unmittelbar nach dem Auftragen des Klebemittels 3 anzupressen ; man kann jedoch auch das Klebemittel wenigstens teilweise abbinden lassen, um dadurch eine etwas größere Anfangsfestigkeit zu erreichen. Die Ultraschallschwingungen werden spätestens dann eingeschaltet, wenn sie auf dem Randstreifen aufliegt. Die Sonotrode kann jedoch auch ständig Ultraschall abgeben, also auch dann, wenn sie nicht auf die Klebestelle gepreßt wird. Die Sonotrode kann auch so lange eingeschaltet bleiben, bis sie wieder von der Klebestelle wegbewegt wird ; es ist also nicht notwendig, die Ultraschallenergie schon vorher abzuschalten, damit sich die Klebestelle vor dem Entfernen des Preßdrucks erst abkühlen kann.

Ist das Klebemittel beim Zusammenpressen der beiden miteinander zu verbindenden Teile bereits teilweise abgebunden, so wird das Klebemittel durch den Ultraschall reaktiviert und anschließend bei der Abbindung durch den Ultraschall unterstützt.

Damit ist es möglich, den Auftrag des Klebemittels an beliebiger, im Fertigungsablauf besonders passender Stelle vorzusehen und nicht notwendig, die Auftragsstelle unmittelbar vor der Vereinigungsstelle der beiden Teile anordnen zu müssen.

## Ansprüche

1. Verfahren zum Verkleben von Papier- und/oder Kartonteilen oder dgl., insbesondere zur Herstellung von Faltschachteln, Dosen und Bechern, bei dem wenigstens auf eines der miteinander zu verklebenden Teile ein selbsttätig abbindendes Klebemittel in Form von wässrigem Kaltleim aufgebracht wird, und die miteinander zu verklebenden Teile dann aufeinandergepreßt werden, dadurch gekennzeichnet, daß zum Aufeinanderpressen ein Ultraschallgeber (Sonotrode 4) und ein Gegenwerkzeug (Dorn 1) verwendet werden, wobei das Klebemittel (3) in seinem Abbindevorgang durch den Ultraschall unterstützt bzw. das bereits wenigstens teilweise abgebundene Klebemittel durch den Ultraschall reaktiviert wird.

2. Verfahren nach Anspruch 1, dadurch gekennzeichnet, daß der Ultraschallgeber (Sonotrode 4) und/oder das Gegenwerkzeug (Dorn 1) gekühlt werden.

3. Verfahren nach Anspruch 1 oder 2, dadurch gekennzeichnet, daß die Klebestelle während der gesamten Preßdauer mit Ultraschall beaufschlagt wird.

## Claims

1. A process for gluing paper and/or board sections etc., particularly in the production of folding cartons, containers and tubs, in the course of which an adhesive that sets unassisted is applied to at least one of the sections that are to be glued together in the form of an aqueous cold-setting adhesive and the sections that are to be glued together are then pressed together, wherein an ultrasonic generator (sonotrode 4) and a mandrel (1) are used to press the relevant sections together and the setting process of the adhesive (3) is assisted by the ultrasonics and the adhesive that has already at least partially set is reactivated by the ultrasonics.

2. A process according to claim 1, wherein the ultrasonic generator (sonotrode 4) and/or the mandrel (1) are cooled.

3. A process according to claim 1 or 2, wherein the area being glued is given ultrasonic treatment the whole time that pressure is applied.

## Revendications

1. Procédé pour le collage de parties en papier et/ou en carton ou similaires, en particulier pour la fabrication de cartonnages pliants, de boîtes ou de pots, selon lequel un agent de collage aux propriétés auto-solidifiantes en forme de colle à froid aqueuse est apposé au moins sur l'une des parties à coller entre elles, et selon lequel lesdites parties sont pressées l'une contre l'autre, caractérisé en ce que la pression est réalisée au moyen d'une source d'ultrasons (Sonotrode 4) et d'une contrepartie d'outillage (Mandrin 1), lors de laquelle les ultrasons accélèrent le processus de durcissement de l'agent de collage (3) ou bien réactivent l'agent de collage déjà au moins partiellement durci.

2. Procédé suivant la revendication 1, caractérisé en ce que la source d'ultrasons (Sonotrode 4) et/ou la contrepartie d'outillage (Mandrin 1) sont refroidies.

3. Procédé suivant la revendication 1 ou 2, caractérisé en ce que les zones de collage sont soumises à l'action d'ultrasons durant la totalité du temps de pression.

Fig. 1

Fig. 2